Europäisches Patentamt

European Patent Office

Office européen des brevets

(19)

(11) Publication number: **0 163 350**
**A1**

(12) # EUROPEAN PATENT APPLICATION

(21) Application number: **85200815.0**

(22) Date of filing: **22.05.85**

(51) Int. Cl.⁴: **F 16 L 59/06**

(30) Priority: **28.05.84 IT 2112784**

(43) Date of publication of application:
**04.12.85 Bulletin 85/49**

(84) Designated Contracting States:
**DE FR GB SE**

(71) Applicant: **N.V. Philips' Gloeilampenfabrieken**
**Groenewoudseweg 1**
**NL-5621 BA Eindhoven(NL)**

(72) Inventor: **Martinella, Luigi**
**INT. OCTROOIBUREAU B.V. Prof. Holstlaan 6**
**NL-5656 AA Eindhoven(NL)**

(72) Inventor: **Moretti, Franco**
**INT. OCTROOIBUREAU B.V. Prof. Holstlaan 6**
**NL-5656 AA Eindhoven(NL)**

(72) Inventor: **Sina, Adriano**
**INT. OCTROOIBUREAU B.V. Prof. Holstlaan 6**
**NL-5656 AA Eindhoven(NL)**

(74) Representative: **Bos, Kornelis Sjoerd et al,**
**INTERNATIONAAL OCTROOIBUREAU B.V.**
**Prof.Holstlaan 6**
**NL-5656 AA Eindhoven(NL)**

(54) **Method of forming thermal insulation.**

(57) The method comprises the use of containers in the form of bag (6) containing thermally insulating micropowders under vacuum, which are connected by hot-melt adhesive (2), to a wall (1) to be insulated after which pressure (7) is applied.

Fig. 1

./...

EP 0 163 350 A1

*Fig. 3*

Method of forming thermal insulation.

This invention relates to a method of forming thermal insulation on a wall or surface, for example a wall of a domestic refrigerator.

With particular but not exclusive reference to domestic refrigerators, it is known to form their insulation by reacting *in situ*, *i.e.* in the interspaces defined by the inner liner and outer housing of the refrigerator, reactive products which form a foamed polyurethane mass. Foamed polyurethane offers adequate insulation when of suitable thickness. However, there is a need for insulation having a lower overall heat-transfer coefficient for the same thickness or, what amounts of the same thing, the same coefficient but for a smaller thickness, in order to increase the volumetric capacity of a refrigerator of given dimensions.

As a result of studies and experiments carried out by the present Applicants, an insulating body has recently become known (see Italian Patent Application No. 21053 A/84 of 23.5.84) which is constituted by a container or bag enclosing a given quantity of silica-based thermally insulating micropowders under vacuum. These insulating bodies have a smaller thickness than foamed polyurethane for the same overall heat-transfer coefficient.

The object of the present invention is to provide a method which will enable these thermally insulating containers to be used to form thermal insulation on walls which are to be insulated, and specifically to refrigerator walls.

According to the invention, the method is characterized in that a hot-melt adhesive is applied to a wall or surface in a predetermined pattern, at least one bag containing thermally insulating micropowders under vacuum is placed on the wall or surface in contact with the adhesive, and pressure is exerted on the bag on the wall so as to cause the bag to become firmly bounded to the wall by the

0163350

adhesive.

The invention will be more apparent from the following description of a preferred example of the method according to the invention, with reference to the accompanying drawings, in which:

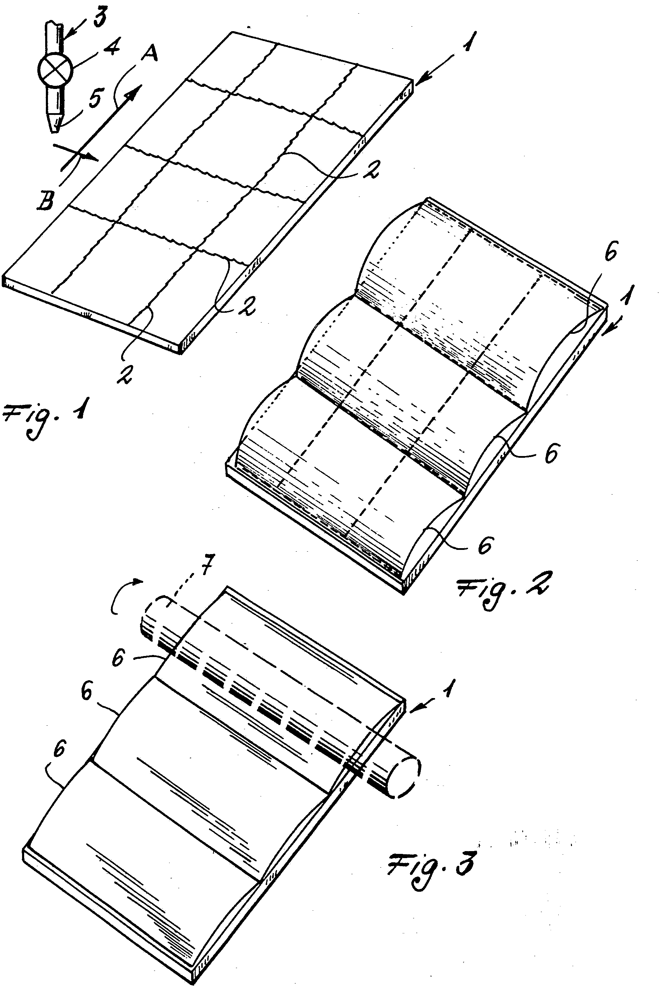

Figures 1, 2 and 3 are perspective views illustrating first, second and third stages respectively of the described method.

In the figures, the reference numeral 1 indicates the wall to be insulated. It may form part of an irregularly shaped structure, including a non-flat structure such as one of the inner liners which define the preservation compartment of a domestic refrigerator. For descriptive simplicity, the wall in the present example is flat and is preferably of sheet-metal construction.

A hot-melt adhesive 2 of known type is applied to the wall 1 in a grid-like pattern with large rectangular meshes, using a distributor 3 provided with an outlet valve 4 and a delivery nozzle 5. The distributor 3 is supported in a manner such that it can be moved, at a short distance from the wall 1, in two orthogonal directions as defined by the arrows A, B in Figure 1. For example, the distributor can be supported by a manually-controlled or motor-driven carriage which is movable in the direction A and relative to B which the distributor can be moved manually or by motor in the other direction B. The distributor can also be moved towards and away from the horizontally disposed wall.

After applying the hot-melt adhesive in the predetermined pattern, insulating bodies 6 are placed on the wall 1 in any convenient manner, including manually. The bodies 6 are constituted by bags (constructed for example by the method described in the aforesaid patent application of the present Applicants) containing a thermally insulating micropowder, for example silica-based, under vacuum. In this example, the insulating bodies are three in number.

Subsequently, by means of, for example, a roller 7, pressure is exerted on the insulating bodies 6 on the wall 1 for the period of time and with the intensity neces-

0163350

sary to obtain firm adhesion of the bodies to the wall 1. There will obviously be relative movement between the roller 7 and wall (together with the bodies 6). Other pressure means can be used instead of the roller, for example a deformable plate, an air chamber, a series of small rollers etc. It is also possible to apply the hot-melt adhesive to the wall in a different pattern to that shown and described or by spreading it over the entire area of the wall on which the bags are to be fixed.

After these operations, the wall is ready for use or for further operations.

Although only one example of the invention has been described, it will be simple for a person skilled in the art to make various modifications thereto within the scope of the invention as defined in the following claims.

A method of forming thermal insulation on a wall or surface, characterized in that a hot-melt adhesive is applied to the wall or surface in a predetermined pattern, at least one bag containing thermally insulating micropowders under vacuum is placed on the wall or surface in contact with the adhesive, and pressure is exerted on the bag on the wall so as to cause the bag to become firmly bounded to the wall by the adhesive.

Fig. 1

Fig. 2

Fig. 3

European Patent
Office

EUROPEAN SEARCH REPORT

01,63350

Application Number

EP 85 20 0815

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-1 297 839  (L.A. POGORSKI) <br> *  Figure 4; page 5, lines 24-40, 71-85; claims 1-3 * | 1 | F 16 L  59/06 |
| Y | FR-A-2 310 984  (GRUNZWEIG & HARTMANN UND GASFASER AG) <br> * Claim 1 * | 1 | |

TECHNICAL FIELDS
SEARCHED (Int. Cl.4)

F 16 L

The present search report has been drawn up for all claims

| Place of search | Date of completion of the search | Examiner |
|---|---|---|
| THE HAGUE | 30-08-1985 | NARMINIO A. |